# EUROPEAN PATENT APPLICATION

(11) **EP 4 808 075 A1**
(43) Date of publication of application: **16.09.2026**
(21) Application number: 26163147.7
(22) Date of filing: 09.03.2026
(51) Int. Cl.: H04L 49/15, H04L 12/40, H04L 49/109, H04L 45/00, H04L 47/10

(54) **IN-VEHICLE COMMUNICATION NETWORK DEVICE THAT PROCESSES AGING PACKETS**

(30) Priority: 12.03.2025 KR 20250032130
(71) Applicant: Telechips Inc., Seongnam-si, Gyeonggi-do 13453 (KR)
(72) Inventor: JEONG, Jae Yeop, 13453 Seongnam-si, Gyeonggi-do (KR); KIM, Dae Hwan, 13453 Seongnam-si, Gyeonggi-do (KR); HU, Ji Hun, 13453 Seongnam-si, Gyeonggi-do (KR)
(74) Representative: Jung, Minkyu

(57) **Abstract**

An in-vehicle communication device comprising a CPU subsystem configured with a plurality of high-performance cores that are electrically isolated from each other, a communication interface including a plurality of Ethernet communication ports, and an Ethernet Packet Processing Engine (EPP) that performs a routing function between the plurality of Ethernet communication ports, wherein the Ethernet Packet Processing Engine (EPP) interprets an input packet received through the communication interface on a hardware basis and forwards the input packet to at least one of the plurality of Ethernet communication ports to which a target node directed by the input packet is connected.

## Description

### BACKGROUND

### TECHNICAL FIELD

The present disclosure relates to an in-vehicle communication network device, and more particularly, to an in-vehicle communication network device that processes aging packets.

### Description of Related Technology

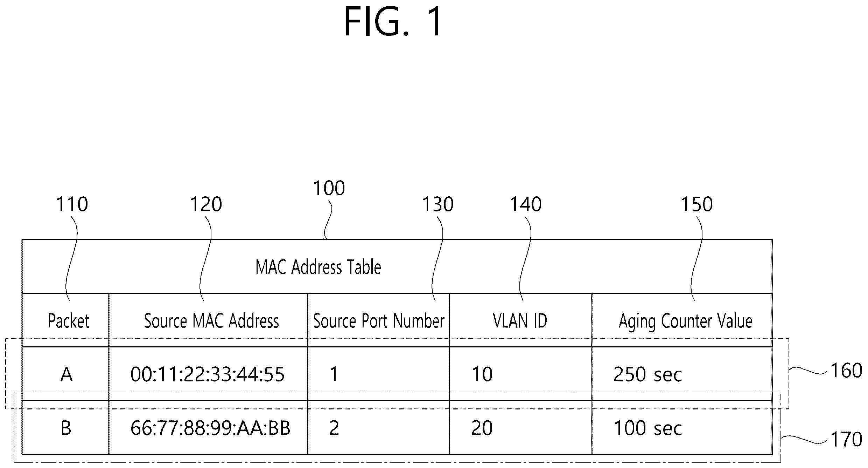

FIG. 1 is a diagram schematically illustrating configuration items of a conventional MAC address table used by an L2 switch for processing incoming packets.

As illustrated in FIG. 1, the conventional MAC address table (100) is a table that is used by the L2 switch to forward incoming packets to the correct port, and stores an address value (120) and port information (130) corresponding to a packet (110). In addition, the MAC address table (100) may further include an aging counter value (150) corresponding to the packet (110).

The aging counter value (150) is for deleting corresponding entries (e.g., 160, 170) from the MAC address table (100) for memory efficiency when an external device (having an unknown address) is connected to the vehicle system via Ethernet communication, and the external device determines, using a MAC hash with a specific rule, whether the external device is continuously communicating with the vehicle system or not communicating, and if the external device has not been communicating for a specific time period (e.g., 5 minutes).

Specifically, each of the packets stored in the MAC address table (100) may include at least one entry (160, 170). Each of the at least one entry (160, 170) may include a source MAC address (120), a source port number (130), a VLAN ID (140), and an aging counter (150).

The source MAC address (120) is a MAC address of a device detected in the network. The source port number (130) is a network port at which the corresponding source MAC address was discovered. The VLAN ID (140) is a VLAN ID currently in use. The aging counter (150) is for measuring a time period for maintaining the corresponding source MAC address.

For example, when a specific device within a vehicle sends a packet to the L2 switch, packet information including the MAC address of the specific device within the vehicle is recorded in the MAC address table (100), and when no packet is detected from the specific device within the vehicle during the recorded aging counter (150) period, the aging counter is reset and the corresponding packet is deleted from the MAC address table (100).

On the other hand, when a new packet that is not in the MAC address table (100) is inputted, or when a packet from the specific device within the vehicle is re-inputted within the aging counter (150) time, the aging counter (150) is initialized. Conversely, when the aging counter (150) expires, the corresponding packet is deleted. As such, all packets in the MAC address table (100) maintain validity or expire by initialization or expiration of the aging counter (150).

However, the conventional aging packet processing method requires placing an aging counter on each packet to manage the aging of each packet. Due to this, when network traffic increases, too many entries may be generated, resulting in a problem of exceeding (overflowing) the table size. Furthermore, in a case where the aging counter initialization fails, renewal traffic may not be properly detected, or sessions or flows may be prematurely expired. In addition, in a case where retransmitted packets are missed, active flows may be erroneously expired, resulting in traffic interruption.

### SUMMARY

Embodiments of the present disclosure may provide an Ethernet Packet Processing Engine (EPP) capable of preventing errors in registration a MAC address table, updating within the MAC address table, and deletion from the MAC address table in an incoming Ethernet packets, caused by memory overflow, in an in-vehicle network device.

However, the technical problems to be solved by the present disclosure are not limited thereto and may be expanded to various environments without departing from the spirit and scope of the disclosure.

According to an embodiment of the present disclosure, an in-vehicle communication network device includes a CPU subsystem configured with a plurality of high-performance cores that are electrically isolated from each other, a communication interface including a plurality of Ethernet communication ports, and an Ethernet Packet Processing Engine (EPP) that performs routing between the plurality of Ethernet communication ports, wherein the Ethernet Packet Processing Engine (EPP) is configured to interpret an incoming packet received through the communication interface on a hardware basis and forward the input packet to at least one of the plurality of Ethernet communication ports to which a target node directed by the input packet is connected.

The Ethernet Packet Processing Engine (EPP) may include a MAC address table, and the Ethernet Packet Processing Engine (EPP) may identify one of the plurality of Ethernet communication ports at which the target node directed by the input packet is located by referring to the MAC address table.

The Ethernet Packet Processing Engine (EPP) may update the MAC address table at each predetermined time, and when partial information of the input packet does not exist in the MAC address table within the predetermined time interval, may transmit the input packet to the CPU subsystem.

The CPU subsystem may add a predetermined bit to a predetermined field of the MAC address table corresponding to the input packet transmitted by the Ethernet Packet Processing Engine (EPP).

The Ethernet Packet Processing Engine (EPP) may include an aging packet manager, and the aging packet manager may automatically update and hold a bit state of the predetermined field according to predetermined rules in hardware, within the predetermined time interval, based on an attribute of the input packet and a bit state of the predetermined field of the MAC address table corresponding to the input packet, wherein the attribute of the input packet includes whether the input packet has been re-inputted to the Ethernet Packet Processing Engine (EPP) in a time interval immediately preceding the predetermined time interval.

The CPU subsystem may query all bit states in the predetermined field of the MAC address table at each of the predetermined times and delete a corresponding packet from the MAC address table when the bit state is a predetermined state.

In another aspect, a method for processing aging packets by an in-vehicle communication network device may include a step of checking whether partial information of a packet inputted to an Ethernet Packet Processing Engine (EPP) exists in a MAC address table within a predetermined time interval, a step of checking whether the inputted packet is a packet that was inputted in a time interval immediately preceding the predetermined time interval, and a step of forwarding to a port of a destination address directed by the corresponding packet when a bit of a predetermined field of the MAC address table is in a predetermined state.

In the step of checking whether the partial information of the packet inputted to the Ethernet Packet Processing Engine (EPP) exists in the MAC address table within the predetermined time interval, when the partial information of the input packet is not in the MAC address table within the predetermined time interval, the input packet may be transmitted to a host CPU, and the host CPU may add a predetermined bit to a predetermined field of the MAC address table corresponding to the input packet transmitted by the Ethernet Packet Processing Engine (EPP).

The Ethernet Packet Processing Engine (EPP) may update a bit state of a predetermined field of the MAC address table corresponding to the inputted packet according to predetermined rules when the inputted packet is a packet that was inputted immediately before the predetermined time interval.

The host CPU may update the MAC address table using the update information.

The Ethernet Packet Processing Engine (EPP) may hold a bit state of a predetermined field of the MAC address table corresponding to the inputted packet when the inputted packet is not a packet that was inputted immediately before the predetermined time interval, and the host CPU may update the MAC address table using the holding information.

The host CPU may query all bit states of a predetermined field of the MAC address table at each predetermined time and delete a corresponding packet from the MAC address table when the bit state is a predetermined state.

The host CPU may update all bit states of a predetermined field of the MAC address table to another state at each predetermined time.

The disclosed technology may have the following effects. However, this does not mean that a specific embodiment must include all of the following effects or only the following effects, and therefore, the scope of the disclosed technology should not be understood as being limited thereby.

The in-vehicle network device according to embodiments of the present disclosure may process aging packets quickly and accurately among input packets without packet loss and time delay by processing a portion of the aging packet on a hardware basis.

### BRIEF DESCRIPTION OF THE DRAWINGS

FIG. 1 is a diagram schematically illustrating configuration items of a conventional MAC address table used by an L2 switch for processing incoming packets.
FIG. 2 is a block diagram illustrating a detailed internal configuration of a central control unit (10) within a vehicle according to an embodiment of the present disclosure.
FIG. 3 is an internal block diagram of an Ethernet Packet Processing Engine (EPP) that controls the path of Ethernet packets in the second accelerator of FIG. 2 according to an embodiment of the present disclosure.
FIGs. 4a to 4e are diagrams illustrating a process of changes in fresh bits in a MAC address table according to processing of aging packets according to an embodiment of the present disclosure.
FIG. 5 is a diagram illustrating a process of changes in fresh bits in a time-series manner according to an embodiment of the present disclosure.
FIG. 6 is a flowchart illustrating a process of processing aging packets in the Ethernet Packet Processing Engine (EPP) according to an embodiment of the present disclosure.

### DETAILED DESCRIPTION OF EXAMPLE EMBODIMENTS OF THE INVENTION

The present disclosure may be subject to various modifications and may have various embodiments, and specific embodiments are illustrated in the drawings and described in detail in the detailed description. However, this is not intended to limit the present disclosure to specific embodiments, and it should be understood that the present disclosure includes all modifications, equivalents, and alternatives that fall within the technical spirit and technical scope of the present disclosure. In describing the present disclosure, when it is determined that a detailed description of related known technologies may obscure the gist of the present disclosure, the detailed description thereof will be omitted.

Terms such as first and second may be used to describe various components, but the components are not limited by the terms. The terms are used only for the purpose of distinguishing one component from another component.

The terms used in the present disclosure are merely used to describe specific embodiments and are not intended to limit the present disclosure. The terms used in the present disclosure have been selected from currently widely used general terms while considering the functions in the present disclosure, but these may vary depending on the intentions of those skilled in the art, precedents, or the emergence of new technologies. In addition, in certain cases, there are terms arbitrarily selected by the applicant, and in such cases, the meanings thereof will be described in detail in the corresponding description of the disclosure. Therefore, the terms used in the present disclosure should be defined based on the meanings of the terms and the overall content of the present disclosure, rather than the simple names of the terms.

Singular expressions may include plural expressions unless the context clearly indicates otherwise. In the present disclosure, terms such as "include" or "have" are intended to designate the existence of features, numbers, steps, operations, components, parts, or combinations thereof described in the specification, and should be understood as not precluding the possibility of the existence or addition of one or more other features, numbers, steps, operations, components, parts, or combinations thereof.

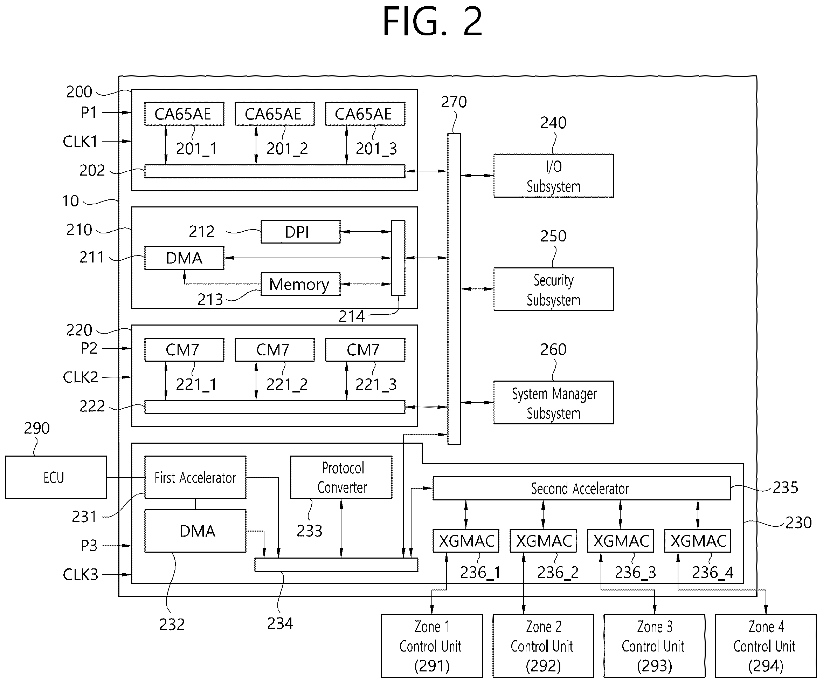

FIG. 2 is a block diagram illustrating a detailed internal configuration of a central control unit (10) within a vehicle according to an embodiment of the present disclosure.

As illustrated in FIG. 2, the central control unit (10) according to an embodiment of the present disclosure may broadly include a CPU subsystem (200), a memory subsystem (210), an MCU subsystem (220), a network subsystem (230), an input/output subsystem (240), and a main NoC (Network On Chip) bus system (270).

The central control unit (10) is connected to at least two zone control units (291, 292, 293, 294) via a TSN-based backbone network, and may also be connected to a plurality of domain controllers (not shown) and auxiliary driving devices (not shown).

The CPU subsystem (200) may include three high-performance cores (201_1, 201_2, 201_3) (e.g., Arm Cortex-65AE) that are physically isolated in a hypervisorless structure, and each of the three high-performance cores may independently manage multi-domains (chassis, body, and powertrain domains) of the vehicle and may operate as an application processor. In addition, the CPU subsystem (200) includes an interrupt controller and a clock generation and monitoring unit to manage interrupts from peripheral devices within the system, and may generate and monitor clocks required for all modules throughout the system.

The MCU subsystem (220) may include a plurality of cores (221_1, 221_2, 221_3), and a master register (not shown) stores and manages various device control command data generated in the MCU subsystem (220), controls specific functions through event-based register mirroring, and may check system errors and process interrupts. In addition, one of the plurality of cores (221_1, 221_2, 221_3) processes real-time data, another core is responsible for monitoring system status or detecting errors, manages the overall control flow of the system, and may record errors when they occur and perform corresponding commands as needed.

The memory subsystem (210) manages data transfer between processing units and peripheral devices in conjunction with the main NoC bus system (270), and may be responsible for memory access. Here, the memory (213) may include external Double Data Rate (DDR) memory and external Serial-NOR flash memory.

The NoC bus system (270) is a switched fabric in which an arbitrary master device is connected to an arbitrary slave device and a plurality of master devices may be simultaneously connected to a plurality of slave devices.

In addition, a DMA controller (211) supports efficient data transfer between the memory (213) and peripheral devices, and a Deep Packet Inspection (DPI) engine

(212) may identify malicious attacks from outside by deeply analyzing data packets transmitted through the vehicle network.

The security subsystem (250) may include a security processor equipped with dedicated memory, encryption, a random number generator, and other peripheral devices. Once secure booting is completed, devices external to the security subsystem (250), including the security processor, cannot directly access or control most hardware blocks inside the security subsystem (250). The security subsystem (250) may communicate with other processing units through a mailbox.

The network subsystem (230) may perform a process of receiving a package containing data, converting the package into a specific format, and creating a new package configured by adding additional information or copying existing information.

The network subsystem (230) may include a first accelerator (231), a second accelerator (235), a protocol converter (233), and a NoC sub-bus system (234).

The first accelerator (231) may perform legacy communication conversion between Electronic Control Units (ECUs) (290) on a hardware basis, that is, CAN-CAN conversion, CAN-LIN conversion, and LIN-LIN conversion, and may have a plurality of CAN/CAN-FD/LIN controllers, a Legacy Packet Processing Engine (LPP engine), and a dedicated DMA controller.

The second accelerator (235) may perform routing between Ethernet ports on a hardware basis, and has multi-gigabit Ethernet communication interfaces (e.g., USXGMII, SGMII, RGMII), a plurality of Gigabit Media Access Controllers (XGMAC, 236_1 to 236_4), and an Ethernet Packet Processing Engine (EPP engine), complies with the IEEE TSN/AVB standard and the IEEE 1599-time stamp standard, and may perform MAC security and IPsec security for incoming packets.

The EPP engine performs the role of a multi-port IEEE 802.3 gigabit Ethernet switch/router, controls data flow through hardware packet classification, scheduling, and shaping, and may perform a function of interpreting Ethernet packets received through Ethernet ports on a software basis or a hardware basis and switching the Ethernet packets to an Ethernet port at which a target node is located.

The EPP engine performs internal packet scheduling when congestion or scheduled scheduling is required for internal traffic of the central control unit (10), and may determine to drop incoming packets when there is insufficient space in the internal buffer, making communication difficult.

The EPP engine may include a hardware-based classifier, and the hardware-based classifier may rapidly disassemble the internal structure of a packet when the packet arrives and compare the header and payload against predefined rules. Specifically, the classifier may determine the type and destination of the input packet through specific conditions (e.g., if statements, gate operations, parallel operations). That is, the classifier may use a lookup table to check items matching the attributes of the packet and rapidly determine forwarding or drop actions.

The EPP engine may use a MAC HASH table as a lookup table for L2 switching, and may determine port forwarding of a packet using a MAC address (corresponding to an in-vehicle device) and a VLAN ID (an ID grouping MAC addresses).

The MAC HASH table is divided into a general area and a collision area, and the collision area may be a space for preparing for overflow of the general area. For example, when addresses A and B are received, a collision may occur, and the collision space may be used to prevent such collisions. That is, when address A is matched to packet No. 1, packet No. 1 may have a structure in which a pointer stating "if not matched, refer to the collision space" is written.

However, it may be difficult to find, one by one, at which entry of the table and what contents the corresponding MAC address has when a MAC address arrives using a hash algorithm. Therefore, a hash value is generated using a specific algorithm with the MAC address and VLAN ID, the hash value is used as an address, and entries may be found based on the address. The lookup contents are stored in a 188-bit memory, and the 188-bit memory contents may include table size adjustment, access information, and action entries.

The contents of the action entry field may include actions such as whether to discard the input packet, to which Ethernet port to forward, to which scheduler to assign the corresponding traffic, to which traffic control side to hand over, or, if it is a new packet, to PUNT (send up) to the CPU side, and for packets that need to be processed by overlapping, to search multiple tables and override.

A lookup table may have a plurality of tables including a MAC address table, a routing table, and an ACL table, and among the plurality of tables, action matching may be determined by priority, and forwarding or routing may be determined.

The first priority is an Access Control List (ACL) table, and if an input packet matches the contents stored in the ACL, the determined action of the ACL table may be performed. The second priority is to determine whether the input packet has been processed by IPsec, and if it has been processed by IPsec, a decryption action may be performed. The third priority is to process data forwarded from the host CPU. Thereafter, processing to PUNT to the host CPU may be performed when stream, DDoS attack blocking, erroneous packets, or packets not in the MAC address table are inputted.

Finally, matching items may be found based on rules set in hardware through the MAC HASH table, and forwarding actions may be determined.

In addition, a field for determining whether to operate a specific MAC address statically or dynamically may also be included.

The protocol converter (233) may be responsible for conversion and forwarding between heterogeneous packet formats, and may be implemented and executed as a software-based processor. That is, the protocol converter (233) may perform at least one of Ethernet-CAN protocol conversion and Ethernet-LIN protocol conversion.

A CAN message converted to an Ethernet packet through the protocol converter (233) may be forwarded to an Ethernet port including a destination node of the CAN message through the EPP engine. In addition, an Ethernet packet forwarded through the EPP engine may be converted to a CAN message through the protocol converter (233) and transmitted to a CAN port at which a target node is located by the LPP engine.

The network subsystem (230) may automatically route certain types of frames.

The network subsystem (230) further includes a parsing unit (not shown), and the parsing unit may extract data in a specific field from a specific type of frame.

A package includes a protocol-dependent address and a payload, and the format of the address and the method of using the address vary depending on the communication protocol. For example, Ethernet uses a 48-bit Media Access Control (MAC) address to identify a destination node used in unicast or multicast packets, CAN uses an 11-bit or 29-bit message identifier to identify message content used in multicast, and FlexRay uses a temporal relationship to identify message content used in multicasting messages.

The input/output subsystem (240) includes an external device controller, and may provide a connection between the network subsystem (230) and external devices. Here, the external device controller may include eMMC, a USB 2.0 device, an Ethernet MAC, and the like. The input/output subsystem (240) may include a Serial Peripheral Interface (SPI), I2C, Pulse Density Modulation (PDM), UART, a CAN communication controller, and an Analog-to-Digital Converter (ADC).

The central control unit (10) may include a port capable of receiving an actuator driving signal transmitted from a zone control unit (291, 292, 293, 294) or an Electronic Control Unit (ECU) (190), and when the actuator driving signal received through the port includes a predetermined signal pattern corresponding to an actuator connected thereto, the central control unit (10) may have a path for bypassing the actuator driving signal and transmitting the actuator driving signal to the actuator connected thereto.

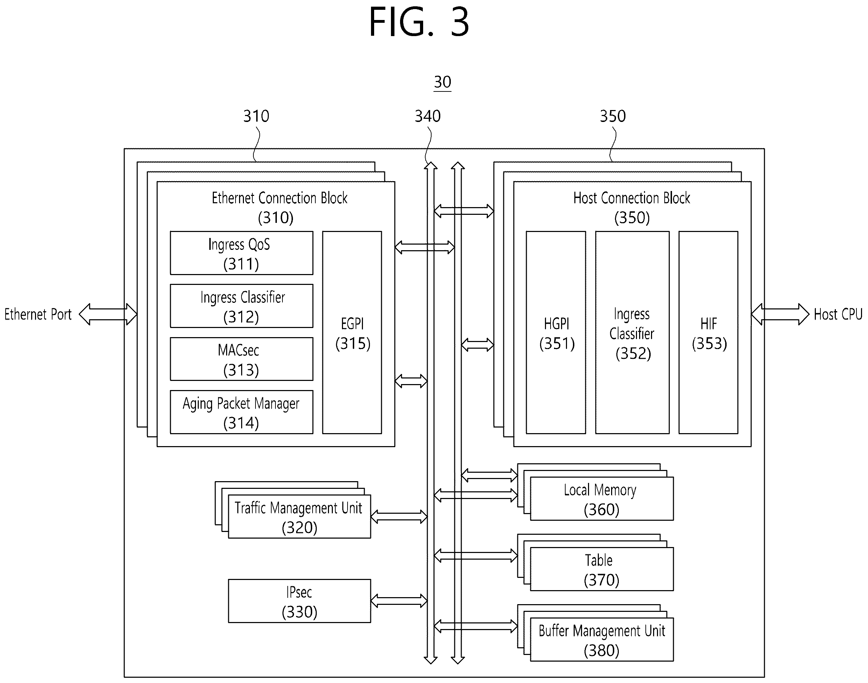

FIG. 3 is an internal block diagram of an Ethernet Packet Processing Engine (EPP) that controls the path of Ethernet packets in the second accelerator of FIG. 2 according to an embodiment of the present disclosure.

The Ethernet Packet Processing Engine (EPP) (30) of FIG. 3 is located in the second accelerator (235) of FIG. 2, and is a hardware-based engine that controls the path of Ethernet packets.

As illustrated in FIG. 3, the Ethernet Packet Processing Engine (EPP) (30) may include an Ethernet connection block (310), a traffic management unit (320), an IPsec (330), a system bus (340), a host connection block (350), a local memory (360), a table (370), and a buffer management unit (380).

The Ethernet Packet Processing Engine (EPP) (30) may support four Ethernet ports (2x 1G, 1x 2.5G, 1x 5G) and one host port (10G).

The ingress QoS (311) within the Ethernet connection block (310) includes a plurality of functions for internal scheduling and traffic congestion control through a Quality of Service (QoS) function.

The ingress classifier (312) includes a function of distinguishing between registered packets and unregistered packets (including new packets) through reliability checking of input packets on a hardware basis, and determining an appropriate processing method.

The aging packet manager (314) may include hardware-based logic and performs a function of converting a logic state of a predetermined field. For example, the aging packet manager (314) converts a '1' state to a '0' state. The aging packet manager

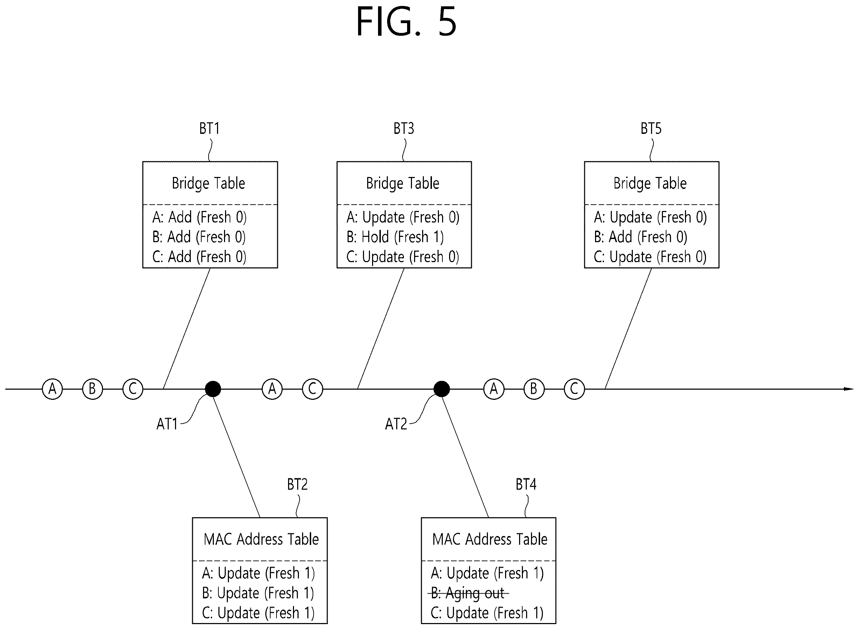

(314) performs the logic state conversion function of the predetermined field when a packet inputted to the Ethernet Packet Processing Engine (EPP) (30) meets predetermined conditions. For example, the predetermined conditions may include a case where the fresh bit of the inputted packet is '1' and the inputted packet has a history of being inputted in a time interval preceding the aging time (AT1, AT2 of FIG. 5).

MACsec (applied to L2 switching) and IPsec (applied to L3/L4 routing) may enhance network security through encryption.

The Ethernet connection block (310) performs MAC address and VLAN ID filtering through a plurality of lookup tables stored in the table (370), determines the reception of the input packet and the Ethernet port to which the input packet is to be transmitted, and may support additional granular processing for the received input packet using an Access Control List (ACL) and a User Defined Field (UDF).

A Host Interface (HIF) (353) of the host connection block (350) serves to connect the host CPU or an external IP with the Ethernet connection block (310).

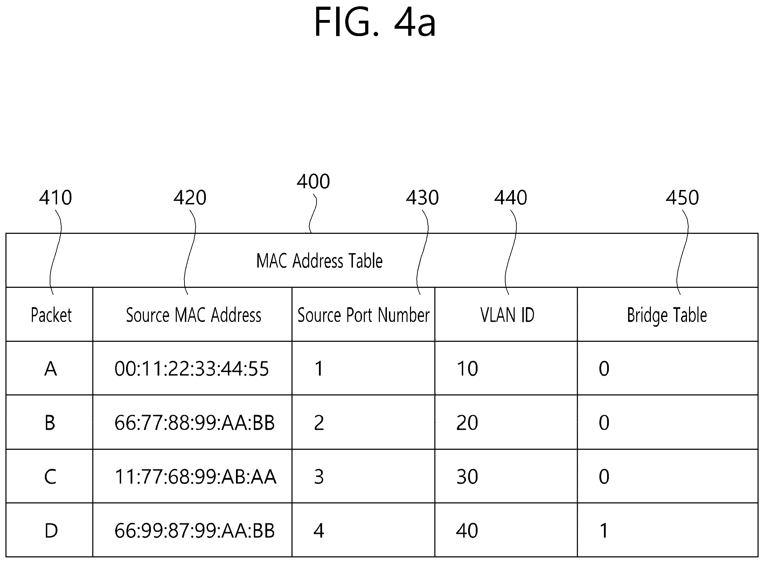

FIGs. 4a to 4e are diagrams illustrating a process of changes in fresh bits in a MAC address table according to processing of aging packets according to an embodiment of the present disclosure.

First, when packets A, B, and C that are not registered in the MAC address table (400) communicate for the first time, the Ethernet connection block transmits the packets to the host CPU.

Thereafter, the host CPU registers information (MAC address, port number, VLAN ID, etc.) of the A, B, and C packets in the MAC address table (400), and at this time, registers the fresh bit in the bridge table (450) of each of the A, B, and C packets as '0'. Here, since the D packet had previously communicated but was not re-inputted in this interval, the fresh bit is maintained as '1' (refer to FIG. 4a).

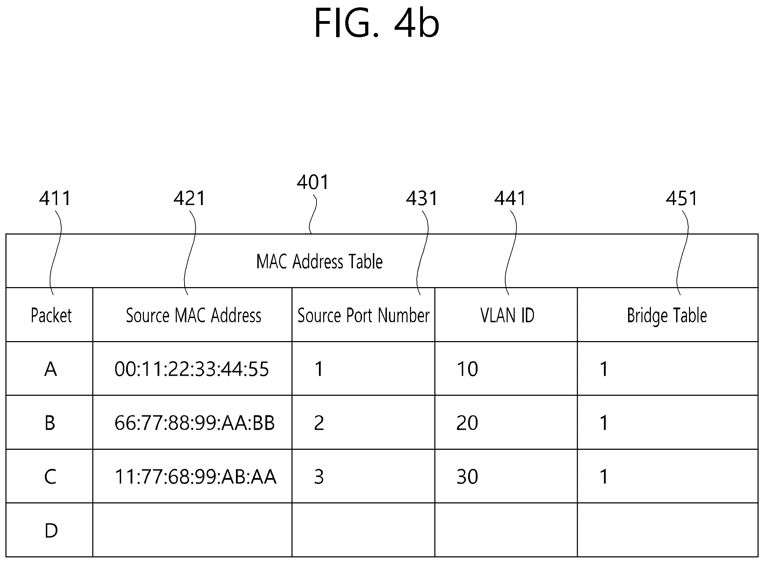

Thereafter, when a certain time has elapsed at a first aging time (AT1 of FIG. 5), the host CPU checks all bridge tables (451), changes fresh bits of '0' to '1', and deletes packets having a fresh bit of '1' from the MAC address table (401). Accordingly, the fresh bits of the A, B, and C packets in FIG. 4a are changed from '0' to '1', and the D packet having a fresh bit of '1' is deleted from the MAC address table (401) (refer to FIG. 4b).

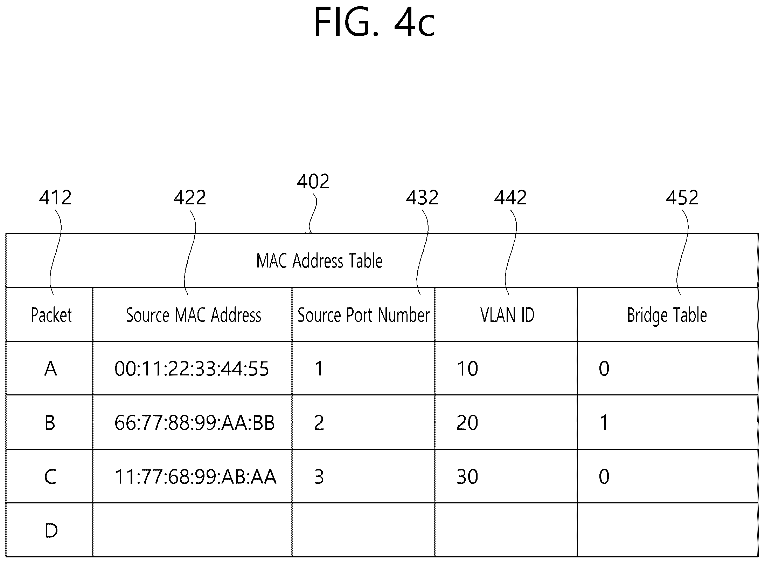

Thereafter, for packets that are re-inputted after the first aging time (AT1) of FIG. 5 has passed, the Ethernet Packet Processing Engine (EPP) automatically changes the fresh bit from '1' to '0'. As illustrated in FIG. 5, when the A and C packets are re-inputted, the fresh bits of the A and C packets are automatically changed from '1' to '0', and since the B packet has not communicated, the fresh bit is maintained as '1' (refer to FIG. 4c).

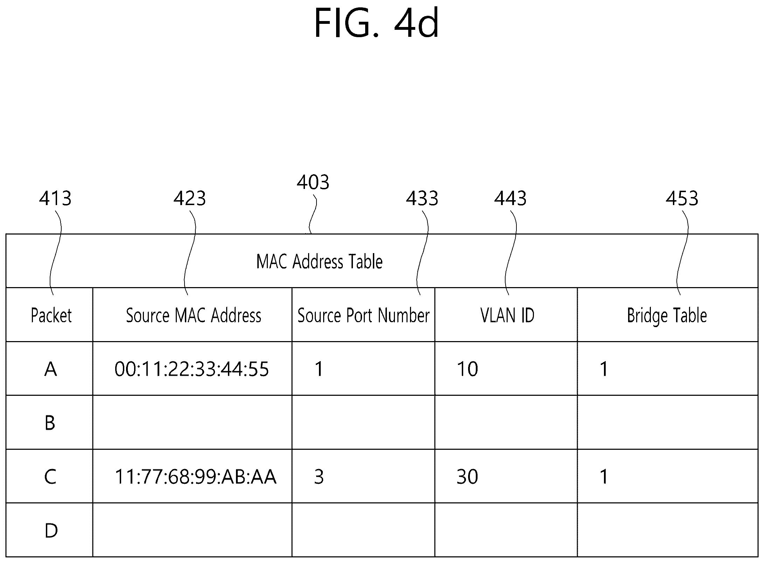

Again, when a certain time has elapsed at a second aging time (AT2 of FIG. 5), the host CPU checks all bridge tables (4352), changes fresh bits of '0' to '1', and deletes packets having a fresh bit of '1' (refer to FIG. 4d). Since the fresh bit of the B packet is 1', the B packet is deleted from the MAC address table (403).

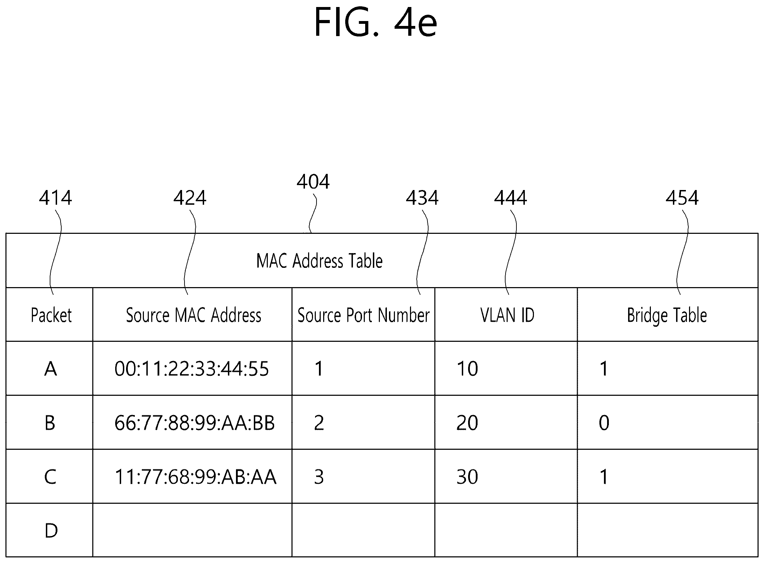

Thereafter, when the B packet is received again after the second aging time (AT2 of FIG. 5), the host CPU newly registers the fresh bit for the B packet as '0' (refer to FIG. 4e).

FIG. 5 is a diagram illustrating a process of changes in fresh bits in a time-series manner according to an embodiment of the present disclosure.

First, when the A, B, and C packets communicate for the first time with the Ethernet Packet Processing Engine (EPP) of the present disclosure, since there are no registered values for the A, B, and C packets in the MAC address table, the Ethernet connection block (310) of FIG. 3 transmits the packets to the host CPU (e.g., a central processing unit).

Thereafter, the host CPU registers information (i.e., MAC address, port number, VLAN ID, etc.) of the A, B, and C packets in the MAC address table, and at this time, registers a fresh bit in the bridge table of each of the A, B, and C packets as '0' (BT1).

Thereafter, when a certain time has elapsed at a first aging time (AT1), the host CPU checks all fresh bits of BT1, changes fresh bits of '0' to '1', and deletes packets having a fresh bit of '1' from the MAC address table. Accordingly, the fresh bit '0' of BT1 is changed to fresh bit '1', and packets having a fresh bit of '1' are deleted from the MAC address table by the host CPU (BT2).

Thereafter, for packets that are re-inputted after the first aging time (AT1) has passed, the Ethernet Packet Processing Engine (EPP) automatically changes the fresh bit from '1' to '0'. Specifically, the EPP automatically updates the fresh bit of '1' to '0' using a state transition automatic logic in which a separate logic is added to the existing Finite State Machine (FSM).

As illustrated in FIG. 5, since the A and C packets are re-inputted, the fresh bit '1' of the A and C packets in BT2 is automatically updated to the fresh bit '0', and since the B packet has not communicated, the fresh bit is maintained as '1' (BT3).

Again, when a certain time has elapsed at a second aging time (AT2), the host CPU checks all fresh bit values of BT3, changes fresh bits of '0' to '1', and deletes packets having a fresh bit of '1' from the MAC address table. Accordingly, since the B packet in BT3 has a fresh bit of '1', the B packet is deleted from the MAC address table (BT4).

Thereafter, when the B packet is received again after the second aging time (AT2), the host CPU newly registers the fresh bit for the B packet as '0' (BT5).

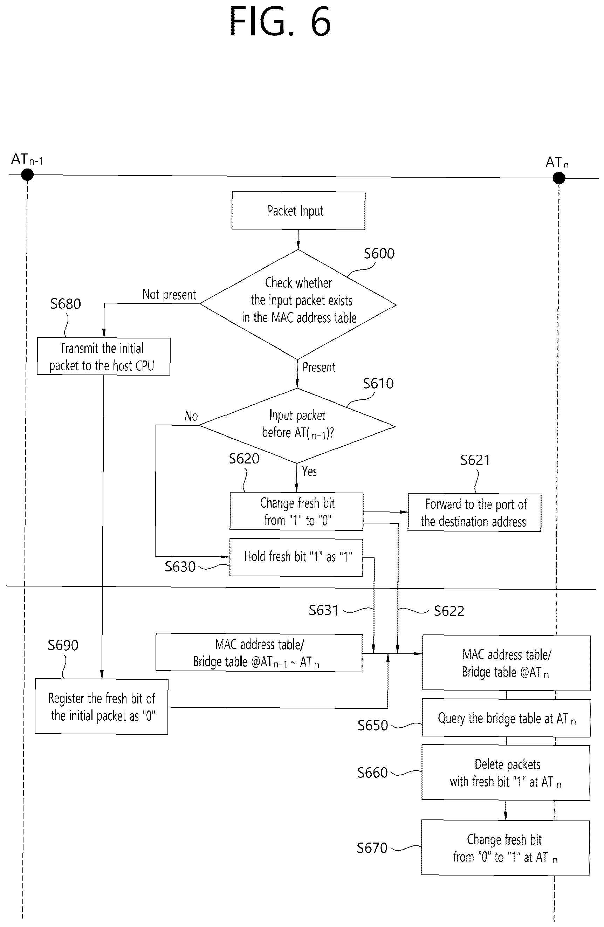

FIG. 6 is a flowchart illustrating a process of processing aging packets in the Ethernet Packet Processing Engine (EPP) according to an embodiment of the present disclosure.

First, the ingress classifier (312) of FIG. 3 checks whether the source MAC address of a packet inputted to the Ethernet Packet Processing Engine (EPP) (30) exists in the MAC address table between ATn-1 and ATn (S600).

In addition, if the inputted packet exists in the MAC address table between ATn-1 and ATn, the aging packet manager (314) of FIG. 3 checks whether the inputted packet is a packet that was inputted before ATn-1 (S610).

If the inputted packet is a packet that was inputted in the interval before ATn-1, the aging packet manager (314) updates the state of the fresh bit in the bridge table of the MAC address table corresponding to the inputted packet (S620). For example, a '1' state may be converted to a '0' state. The host CPU updates the bridge table between ATn-1 and ATn using the update information (S622).

Thereafter, the ingress QoS (311) may forward the packet having a fresh bit in a specific state to a port of the destination address directed by the packet (S621). For example, a packet having a fresh bit in a '0' state may be forwarded to a port of the registered destination address.

If the inputted packet in step S610 is not a packet that was inputted before ATn-1, the aging packet manager (314) holds the state of the fresh bit of the input packet. For example, if the fresh bit of the input packet is in a '1' state, the fresh bit is held in the '1' state (S630). The host CPU updates the bridge table between ATn-1 and ATn using the holding information (S631).

The host CPU queries the bridge table at aging time ATn (S650).

The host CPU deletes packets having a fresh bit in a specific state from the MAC address table in the bridge table at ATn (S660). For example, packets having a fresh bit of '1' are deleted from the MAC address table.

The host CPU updates the specific state of the fresh bit to another state in the bridge table at ATn (S670). For example, the state in which the fresh bit is '0' is changed to the '1' state.

In step S4400, if the source MAC address of a packet inputted to the Ethernet Packet Processing Engine (EPP) (30) does not exist in the MAC address table between ATn-1 and ATn, the ingress classifier (312) transmits the initial packet to the host CPU (S680).

The host CPU adds a specific state to the fresh bit of the initial packet forwarded from the ingress classifier (312) and registers the initial packet in the MAC address table between ATn-1 and ATn (S640). For example, the initial packet is registered in the MAC address table between ATn-1 and ATn with the fresh bit set to the '0' state (S690).

## Claims

1. An in-vehicle communication network device, comprising:
a CPU subsystem comprising a plurality of high-performance cores that are electrically isolated from each other;
a communication interface having a plurality of Ethernet communication ports; and
an Ethernet Packet Processing Engine (EPP) configured to perform a routing function between the plurality of Ethernet communication ports,
wherein the Ethernet Packet Processing Engine (EPP) is configured to interpret an incoming packet, on a hardware basis, received through the communication interface and forward the input packet to at least one of the plurality of Ethernet communication ports to which a target node designated by the input packet is connected.

2. The in-vehicle communication network device of claim 1, wherein the Ethernet Packet Processing Engine (EPP) includes a MAC address table, and the Ethernet Packet Processing Engine (EPP) is configured to identify one of the plurality of Ethernet communication ports at which the target node designated by the input packet is located by referring to the MAC address table.

3. The in-vehicle communication network device of claim 2, wherein the Ethernet Packet Processing Engine (EPP) is configured to update the MAC address table at each predetermined time, and when partial information of the input packet does not exist in the MAC address table within a predetermined time interval, the Ethernet Packet Processing Engine (EPP) is configured to transmit the input packet to the CPU subsystem.

4. The in-vehicle communication network device of claim 3, wherein the CPU subsystem is configured to add a preset bit to a predetermined field of the MAC address table corresponding to the input packet transmitted by the Ethernet Packet Processing Engine (EPP).

5. The in-vehicle communication network device of claim 4, wherein the Ethernet Packet Processing Engine (EPP) includes an aging packet manager, and the aging packet manager is configured to, within the predetermined time interval, automatically update and hold a bit state of the predetermined field according to predetermined rules in hardware, based on an attribute of the input packet and the bit state of the predetermined field of the MAC address table corresponding to the input packet, wherein the attribute of the input packet includes whether the input packet has been re-input to the Ethernet Packet Processing Engine (EPP) in an interval immediately preceding the predetermined time interval.

6. The in-vehicle communication network device of claim 4 or 5, wherein the CPU subsystem is configured to query all bit states in the predetermined field of the MAC address table at each predetermined time, and when the bit state is a preset state, to delete a corresponding packet from the MAC address table.

7. A method for processing an aging packet by an in-vehicle communication network device, the method comprising:
checking whether partial information of a packet input to an Ethernet Packet Processing Engine (EPP) exists in a MAC address table within a predetermined time interval;
checking whether the input packet is a packet that was input in an interval immediately preceding the predetermined time interval; and
when a bit of a predetermined field of the MAC address table is in a preset state, forwarding a corresponding packet to a port of a destination address designated by the packet.

8. The method of claim 7, wherein, in the step of checking whether the partial information of the packet input to the Ethernet Packet Processing Engine (EPP) exists in the MAC address table within the predetermined time interval, when the partial information of the input packet does not exist in the MAC address table within the predetermined time interval, the method further comprises transmitting the input packet to a host CPU, and the host CPU adding a preset bit to a predetermined field of the MAC address table corresponding to the input packet transmitted by the Ethernet Packet Processing Engine (EPP).

9. The method of claim 7 or 8, further comprising: when the input packet is a packet that was input immediately before the predetermined time interval, the Ethernet Packet Processing Engine (EPP) updating a bit state of a predetermined field of the MAC address table corresponding to the input packet according to predetermined rules to generate update information.

10. The method of claim 9, further comprising: updating, by the host CPU, the MAC address table using the update information.

11. The method of any one of claims 7 to 10, further comprising: when the input packet is not a packet that was input immediately before the predetermined time interval, holding, by the Ethernet Packet Processing Engine (EPP), a bit state of a predetermined field of the MAC address table corresponding to the input packet to generate holding information, and updating, by the host CPU, the MAC address table using the holding information.

12. The method of claim 11, further comprising: querying, by the host CPU, all bit states of the predetermined field of the MAC address table at each predetermined time, and deleting a corresponding packet from the MAC address table when the bit state is a preset state.

13. The method of claim 12, further comprising: updating, by the host CPU, all bit states of the predetermined field of the MAC address table to a different state at each predetermined time.
